# EUROPEAN PATENT APPLICATION

(11) **EP 0 693 820 A1**
(43) Date of publication of application: **24.01.1996**
(21) Application number: 95110833.1
(22) Date of filing: 11.07.1995
(51) Int. Cl.: H02M 7/00, H02M 7/48, H02M 5/45, B60L 9/24

(54) **Electric power conversion device for alternating current electric car**

(30) Priority: 20.07.1994 JP 167696/94
(71) Applicant: HITACHI, LTD., Chiyoda-ku, Tokyo 101 (JP); HITACHI MITO ENGINEERING CO., LTD., Hitachinaka-shi, Ibaraki 312 (JP)
(72) Inventor: Ando, Takeshi, CH-8125 Zollikerberg (CH); Horie, Akira, Hitachinaka-shi, Ibaraki 312 (JP); Saitou, Syuuji, Hitachinaka-shi, Ibaraki 312 (JP); Takaku, Toshihiko, Hitachinaka-shi, Ibaraki 312 (JP); Takasaki, Toshio, Hitachinaka-shi, Ibaraki 312 (JP)
(74) Representative: Strehl Schübel-Hopf Groening & Partner

(57) **Abstract**

In order to decrease the size of an electric power conversion device for a PWM converter/inverter electric car sharing a PWM converter (7a,7b,7c,7d) and a PWM inverter (7e,7f,7g), a main circuit unit is constructed by combining at least one phase portion (7a) of the PWM converter and at least one phase portion (7e) of the PWM inverter, and each of the main circuit unit has a cooling device (18,19) common to the converter and inverter.

## Description

### Background of the Invention

The present invention relates to an electric power conversion device for an electric car actuated by alternating current source using a PWM converter and a PWM inverter, and more particularly to cooling of an electric power conversion device.

In the past, in an electric power conversion device for an electric car actuated by alternating current source having an inverter for driving an induction motor by converting alternating current to direct current with two sets of single phase converters and by converting the direct current into three phase alternating current, the converters for two phase portions form one unit, two phase portions of the inverter form one unit, and the combination of the remaining inverter for one phase portion and an over voltage protection circuit forms one unit. A technology is disclosed in Japanese Patent Application Laid-Open No.4-71303 (1992) where these units are formed in the same structure to share the unit with each other and standardize.

The aforementioned electric power conversion device is composed of switching elements,
and these switching elements are required to be cooled. Although the above conventional technology describes sharing of units, there is no consideration on decreasing the size of its cooling devices.

### Summary of the Invention

The object of the present invention is to decrease the size of the cooling devices as well as to share the units with each other, and to decrease the total size of the electric power conversion device including the units.

The object of the present invention can be attained by providing an electric power conversion device having a converter for converting an alternating current to a direct current and constructed with semiconductors of a plurality of self arc-extinguishing elements connected in series corresponding to one phase portion thereof,and an inverter for converting the direct current to an alternating current and constructed with semiconductors of a plurality of self arc-extinguishing elements connected in series corresponding to another one phase portion thereof, wherein said at least one phase portion of said converter and said at least one phase portion of said inverter are mounted on the same cooling device.

When an electric car is driven from its stopping state to its maximum speed by operating a PWM (pulse width modulation) converter and a PWM inverter, in general, the loss of the PWM converter becomes maximum at a high speed region where the converted electric power becomes maximum and the loss of the PWM inverter becomes maximum at a low speed region where the switching frequency of the self arc-extinguishing elements becomes high. As described above, the speed at which the loss becomes maximum is different between the both. In a case where a PWM converter for one phase portion and a PWM inverter for one phase portion are mounted on a cooling device, the cooling capacity of the cooling device, therefore, may be the maximum value of the sum of the loss of the PWM converter and the loss of the PWM inverter, which is smaller than the sum of the maximum loss of the PWM converter and the maximum loss of the PWM inverter. As the result, the cooling capacity can be made small comparing to the case where the electric power converter is shared between the PWM converter and the PWM inverter, or the cooling capacity of the cooling device is determined for the PWM converter or the PWM inverter individually.

### Brief Description of the Drawings

FIG.1 is a circuit diagram showing the construction of an embodiment in accordance with the present invention.

FIG.2 is a graph showing the relationship between velocity of an electric car and semiconductor loss.

FIG.3 is a graph showing the relationship between velocity of an electric car and snubber loss.

FIG.4 is a circuit diagram showing the construction of another embodiment in accordance with the present invention.

FIG.5 is a view showing the construction of an embodiment of a main circuit unit forming two phase portions of a converter and an inverter in a unit.

FIG.6 is a view showing the construction of an embodiment of a main circuit unit forming four phase portions of converters and inserters in a unit.

FIG.7 is a perspective view showing a main circuit unit forming four phase portions in a unit.

FIG.8 is a perspective view showing a main circuit unit forming four phase portions in a unit.

FIG.9 is a diagram showing the circuit containing a snubber circuit for one phase portion in an electric power conversion device.

### Detailed Description of the Preferred Embodiments

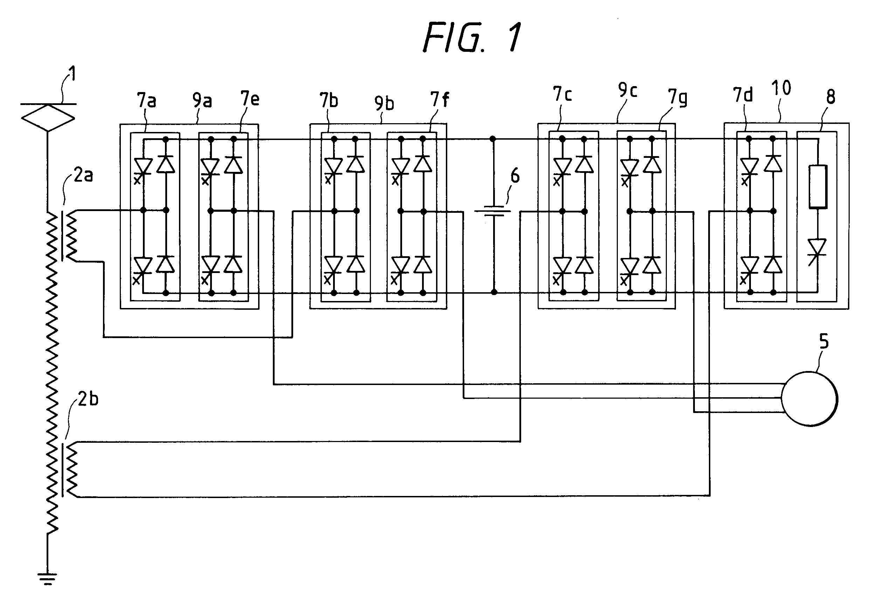

An embodiment to solve this point of the present invention will be described below, referring to FIG.1. In FIG.1, the reference character 1 is a pantograph (alternating power source in other word), the reference characters 2a, 2b are transformers, the reference character 5 is an induction motor, the reference character 6 is a capacitor in the direct current circuit, the reference characters 7a, 7b are respective semiconductor element groups of an electric power conversion device for one phase portion and a detail circuit thereof is shown in Fig. 9, the reference character 8 is an over voltage protection circuit, and the reference characters 9 and 10 are main circuit units. The PWM converter is composed of the semiconductor element groups 7a, 7b, 7c, 7d and the PWM inverter is composed of the semiconductor element groups 7e, 7f, 7g. In FIG.1, since the PWM converter has 4 phases of the semiconductor element groups 7a , 7b, 7c, 7d and the PWM inverter has 3 phases of the semiconductor element groups 7e, 7f, 7g, 3 phases out of the 4 phases of the PWM converter (the semiconductor element groups 7a , 7b, 7c in FIG.1 though any combination is possible) are combined with the phases of the semiconductor element groups 7e, 7f, 7g of the PWM inverter to form main circuit units 9a, 9b, 9c. And the remaining 1 phase of the semiconductor element group 7d of the PWM converter is combined with the over voltage protection circuit 8 to form a main circuit unit 10.

Snubber circuits is respectively connected to the semiconductor element groups 7a, 7b, 7c, 7d, 7e, 7f, 7g in each phase portion of the electric power conversion device to absorb surge voltage, and such semiconductor element groups having the sunubber circuit are shown in FIG.9. The reference characters 11a, 11b indicate self arc-extinguishing elements such as gate turn-off switches( GTO), the reference characters 12a, 12b are inverse parallel diodes, the reference characters 13a, 13b is snubber diode, the reference character 14 is a snubber capacitor, and the reference character 15 is a snubber resistor. In the semiconductor element group corresponding to the one phase portion shown in FIG.1, when the self arc-extinguishing element 11 is switched on to allow current to flow, the semiconductor loss is generated in the elements 11a, 11b, 12a, 12b, 13a, 13b and the snubber loss is generated in the capacitors 15a, 15b. These losses are changed into heat to rise the temperature of the electric power conversion device. In order to suppress the temperature rise within a certain value, it is necessary to radiate the heat outside the electric power conversion device using a cooling device.

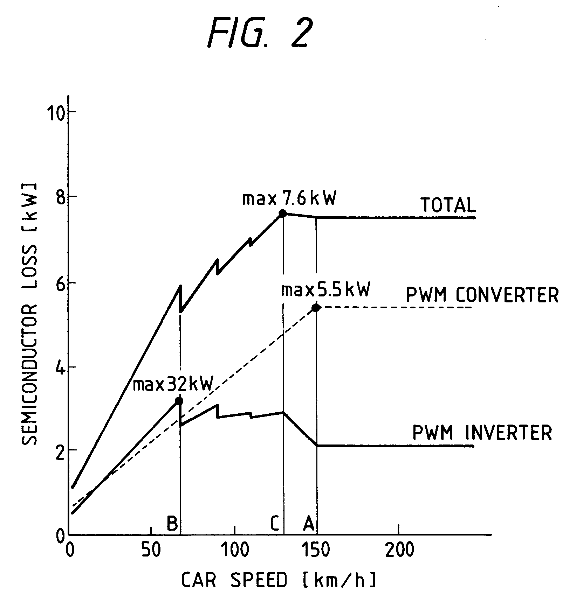

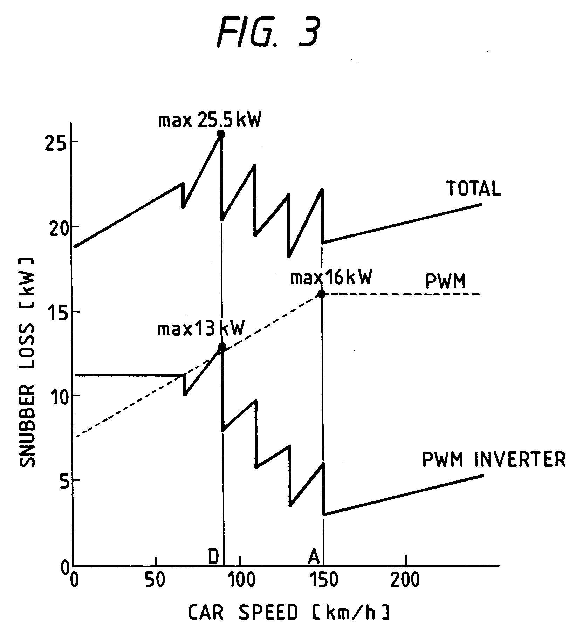

FIG.2 and FIG.3 show examples of calculated results of semiconductor loss and snubber loss in a PWM converter/inverter electric car during the time when the electric car starts to run from its stopping state and reaches at its maximum speed.

FIG.2 shows the relationship between speed of the electric car and semiconductor loss in one phase portion of the electric power conversion device. The solid line among the three lines indicates loss in one phase portion of the PWM converter, the broken line indicates loss in one phase portion of the PWM inverter, and the bold solid line indicate the sum of losses in one phase portion of the PWM converter and one phase portion of the PWM inverter. In FIG.2, the reason why the loss in one phase portion of the PWM inverter discontinuously changes in the region of speed lower than point A is as follows. In the PWM inverter, as the speed of the electric car is increased, the frequency of the inverter is increased, and at that time the switching frequency of the self arc-extinguishing elements is also increased in synchronizing with the integer times of the frequency of the inverter. However, since there is a limitation in the switching frequency of the GTO, the frequency is switched and decreased when the frequency reaches above a certain switching frequency. The output voltage of the PWM inverter becomes constant when the speed of the electric car exceeds the point A, and the switching frequency becomes in one-pulse mode equal to the frequency of the inverter. The maximum value of the loss of the PWM converter is 5.5 kW at the point A. On the other hand, the maximum value of the loss of the PWM inverter is 3.2 kW at point B. And the maximum value of the sum of the losses is 7.6 kW at point C.

In a case where a design capable of applying both of the PWM converter and the PWM inverter is employed, the cooling device is designed based on the maximum value of loss of the PWM converter of 5.5 kW, and accordingly the cooling capacity for two phase portions becomes 11 kW. If one phase portion of the PWM converter and one phase portion of the inverter is mounted on the same cooling device, the cooling capacity becomes 7.6 kW which is 69% of 11 kW. Similarly, FIG.3 shows the relationship between speed of the electric car and snubber loss in one phase portion of the electric conversion device. The solid line among the three lines indicates loss in one phase portion of the PWM inverter, the broken line indicates loss in one phase portion of the PWM converter, and the bold solid line indicate the sum of losses in one phase portion of the PWM converter and one phase portion of the PWM inverter. The maximum value of the loss of the PWM converter is 16 kW at the point A. On the other hand, the maximum value of the loss of the PWM inverter is 13 kW at point D. And the maximum value of the sum of the losses is 25.5 kW at point D. In a case where a design capable of applying both of the PWM converter and the PWM inverter is employed, the cooling device is designed based on the maximum value of loss of the PWM converter of 16 kW, and accordingly the cooling capacity for two phase portions becomes 32 kW. If one phase portion of the PWM converter and one phase portion of the inverter is mounted on the same cooling device, the cooling capacity becomes 25.5 kW which is 80% of 32 kW. Therefore, the cooling capacity of the cooling device can be decreased and the size of the electric power conversion device can be decreased. Although one phase portion of the PWM converter is left, it is possible to eliminate the unused cooling capacity by combining the left one phase portion of the PWM converter with a necessary circuit other than the PWM converter and the PWM inverter such as the over voltage protection circuit as shown in FIG.10.

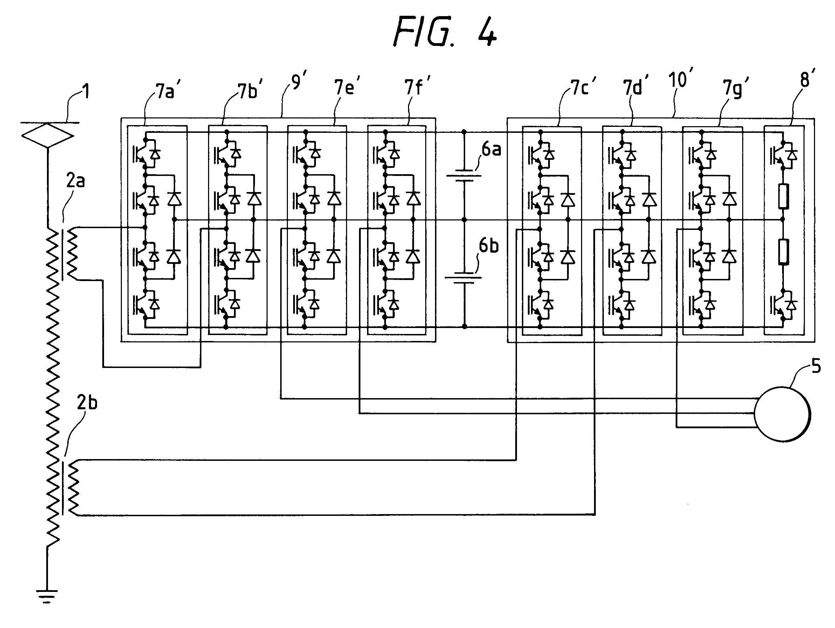

FIG.4 shows anther embodiment in accordance with the present invention. The different point of the embodiment from FIG.1 is that an 3-level converter/inverter using self arc-extinguishing element such as IGBT is used in the semiconductor element group 7a', 7b', 7c', 7d', 7e', 7f', 7g'corresponding to each one phase portion of the electric power conversion device. Therefore, the capacitor in the direct current circuit for forming a neutral point of direct current is divided into two capacitors 6a and 6b. One phase portion of the 3-level converter/inverter is constructed such that four semiconductor elements composed of self arc-extinguishing element and diode connected thereto in inverse parallel are connected in series, the both ends being connected to capacitors 6a and 6b in the direct current circuit, the junction point between the upper-side two semiconductor elements and the junction point between the lower-side two semiconductor elements being connected through two diodes, the junction point between the two diodes being connected to the mid-point of the direct current circuit. A snubber circuit is connected to the semiconductor element groups in the same manner as in FIG.1 though this is not shown in FIG.4.

Therefore, the construction of the main circuit becomes more complex than that in the electric power conversion device shown in FIG.1, and consequently it is required to share the converter with the inverter. Each of the main units 9' and 10' has a construction composed of four phases mounted on one cooling device. Two phases of the semiconductor element groups 7a' and 7b' of the PWM converter and two phases of the semiconductor element groups 7e' and 7f' of the PWM inverter are arranged in the main circuit unit 9', and two phases of the semiconductor element groups 7c' and 7d' of the PWM converter and one phase the semiconductor element group 7g' of the PWM inverter and an over voltage protection circuit 8' are arranged in the main circuit unit 10'. In this case as the same as in FIG.1, it is also possible to decrease the necessary cooling capacity of the cooling devices comparing to the case where the converter and the inverter are separately mounted on cooling devices.

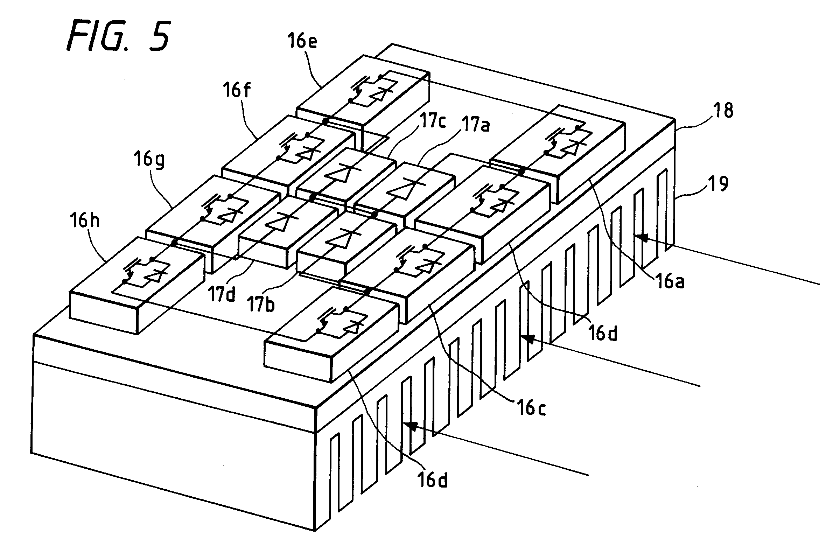

FIG.5 shows the construction of a main circuit unit in which two phases are formed in a unit in taking an 3-level converter/inverter using the self arc-extinguishing element such as IGBT as an example. In FIG.5, the reference characters 16a, 16b, 16c, 16d, 16e, 16f, 16g, 16h are semiconductor elements composed of IGBT (module type) and respective diodes connected in inverse parallel, the reference characters 17a, 17b, 17c, 17d are diodes, the reference characters 18 and 19 indicate the cooling device for cooling the semiconductor elements and the diodes. The reference character 18 is a cooling plate to contact to the semiconductor elements 16 and the diodes 17 to conduct the heat generated in them to fins 19. The heat is radiated from the fins 19, for example, by blowing air in the direction shown by arrows in the figure. Of course, it is possible to blow air in the lateral direction with changing the direction of the fines. One phase portion of the IGBT 3-level converter/inverter is constructed with the circuit composed of elements indicated by the semiconductor elements 16a to 16d, 17a, 17b corresponding to one phase of the semiconductor element groups 7a' to 7d' and another respective one phase portion of the IGBT 3-level converter/inverter is constructed by the circuit composed of elements indicated by the semiconductor elements 16e to 16h, 17c, 17d corresponding to one phase of the semiconductor element groups 7e' to 7g'. Therefore, two phase portions of the circuit are mounted on the same cooling device. Therein, one phase portion of the circuit is used as a converter and the other one phase portion is used as an inverter. By doing so, it is possible to effectively use the cooling ability required for the cooling device and consequently to decrease the size of the cooling fines 19 and to decrease the size of the electric power conversion device as well as to share the units with each other and to standardize the unit.

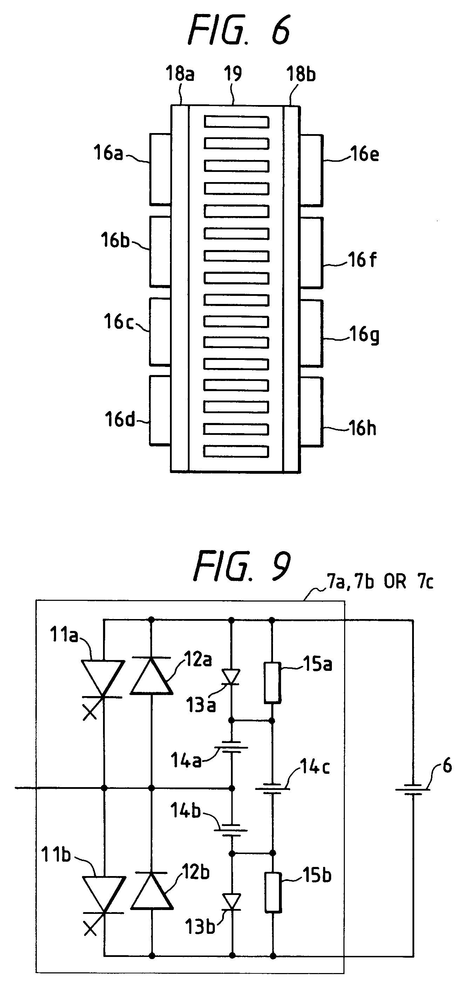

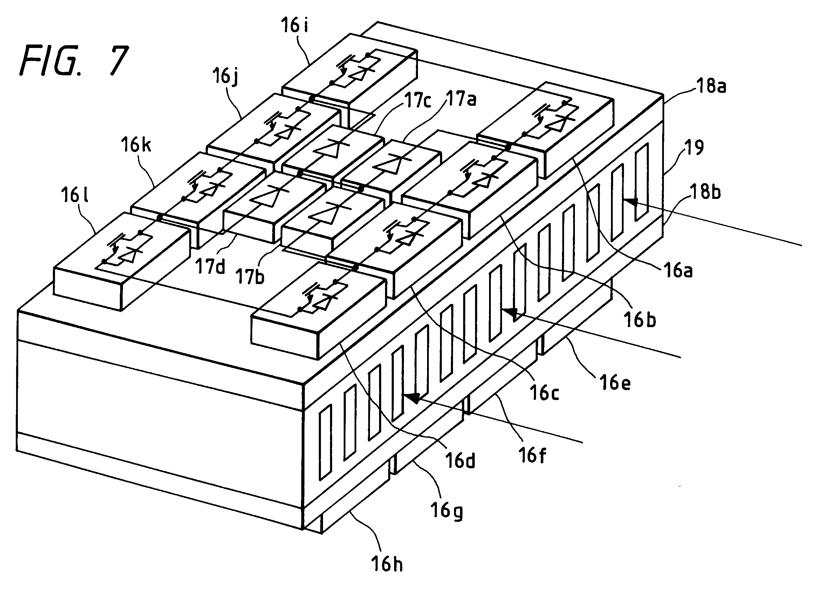

Further, in a case where four phase portions 7a', 7b', 7c', 7d' of the semiconductor element group are mounted on one cooling device as shown in FIG.4, it is possible to provide two cooling plates 18a and 18b in the both sides of the fines 19 and to arrange two phase portions on the one side and the other two phase portions on the other side. FIG.6 is a perspective view of the embodiment. The reference characters 16a to 16l indicate semiconductor elements composed of an IGBT and a diode connected in inverse parallel, the reference character 17a to 17f are diodes, the reference characters 18a, 18b and 19 indicate a cooling device for cooling the semiconductor elements and the diodes. The reference characters 18a, 18b are cooling plates to contact to the semiconductor elements 16a to 16l and the diodes 17a, 17b to conduct the heat generated in them to fins 19. The heat is radiated from the fins 19, for example, by blowing air in the direction shown by arrows in the figure. Of course, it is possible to blow air in the lateral direction with changing the direction of the fines. In Fig. 7, one phase portion of the IGBT 3-level converter/inverter is constructed by the circuit composed of elements indicated by the reference characters 16a to 16d, 17a, 17b, and another one phase portion of the IGBT 3-level converter/inverter is constructed by the circuit composed of elements indicated by the reference characters 16i to 16l, 17c, 17d. Therefore, two phase portions of the circuit are mounted on the same cooling plate 18a. Similarly, on the cooling plate 18b, two phase portions of the circuit composed of the semiconductor elements 16e to 16h, the diodes 17e, 17f, semiconductor elements 16m to 16p and diodes 17g to 17h are mounted. That is, four phase portions of the electric power conversion device are formed in one main circuit unit.

The four-phase integrated main circuit unit arranging four phase portions on one cooling device shown in FIG.7 can be made smaller comparing to two sets of the two-phase integrated main circuit arranging two phase portions on one cooling device by sharing the cooling device and mounting parts to a housing unit for main circuit unit. Further, in assembling work setting a main circuit unit to a housing containing the main circuit unit, the assembling work for the four-phase integrated main circuit unit is less in assembling work and in assembling time and, accordingly, less in production cost comparing to that for the two-phase integrated main circuit unit since assembling one main circuit unit to one housing is simpler that assembling two main circuit units to one housing. Furthermore, in a case of arranging each of two sets of the two phase portions of the electric power conversion device on each side 18a, 18b and 19 of the cooling device, it is possible to share the parts by arranging the sets symmetrically to the cooling device 18a, 18b, 19. Therein, a circuit having a large loss and a circuit having a small loss are arranged on one side, and on the other side a circuit having a small loss is placed in a position reverse side of the cooling device to the position placing the circuit having a large loss, and a circuit having a large loss is placed in a position reverse side of the cooling device to the position placing the circuit having a small loss. By doing so, the cooling ability of the cooling device can be improved by balancing if cooling performance.

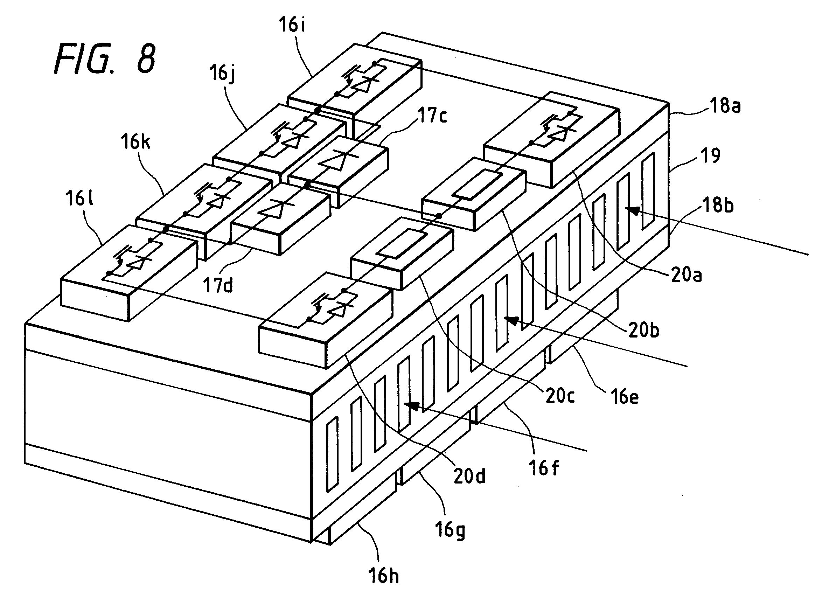

FIG.8 shows the construction of a main circuit unit integrating three phase portions of the electric power conversion device and an over voltage protection circuit in taking a case of an IGBT 3-level control as an example. The three phase portions of the electric power conversion device are the same as the circuit composed of semiconductor elements 16e to 16p and diodes 17c to 17h as shown in FIG.7, and the remaining one phase portion is an over voltage protection circuit composed of semiconductor elements 20a and 20d and resistors 20b and 20c. Although the resistors 20b, 20c are placed on a cooling plate 18a in FIG.8, the resistors may be placed outside the main circuit unit and connected between them. One phase portion of the electric power conversion device (for example, an inverter) and the over voltage protection circuit are arranged on the cooling plate 18a, and two phase portions of the electric power conversion device (one phase portion of the converter and one phase portion of the inverter) are arranged on the cooling plate 18b. The different point of the main circuit unit shown in FIG.8 from the main circuit unit shown in FIG.7 is that one phase portion among the four phase portions of the electric power conversion device in the main circuit unit of FIG.7 is replaced with the over voltage protection circuit, and the other three phase portions of the electric conversion device and the cooling device are the same as those in FIG.7. Thus the parts can be shared between them.

In a case of an electric car actuated by alternating current source, any two phase portions among the four phase portions of the electric power conversion device in the main circuit unit of FIG.7 are used as converters and the remaining two phase portions are used as inserters, and two phase portions among the three phase portions of the electric power conversion device in the main circuit unit of FIG.8 are used as converters and the remaining one phase portion is used as an inverter. Thereby, the size of the cooling device can be made small and the devices can be shares between them.

It is also possible to attain the same effect as above by arranging two phase portions of the converters on the cooling plate 18a and two phase portions of the inserters on the cooling plate 18b, or by arranging one phase portion of the converter and one phase portion of the inverter on each side of the cooling plates, since the cooling capacity of both sides is the same.

As to snubber loss, the snubber resistors for two phase portions or for four phase portions may be placed in the downstream side of cooling air flow passed through the fins to cool the snubber losses of the converter and the inverter together with the semiconductor elements, which makes the required cooling ability small by the amount cooled together.

As having been described above, according to the present invention, the electric power conversion devices can be shared with each other, the cooling capacity required for the electric power conversion device for a PWM converter/ inverter electric car can be decreased, and, as the result, it is possible to attain the effect to make the electric power conversion device for an electric car small in size.

## Claims

1. An electric power conversion device having a converter for converting alternating current into direct current in which a plurality of self arc-extinguishing elements are connected in series in one phase portion, and an inverter for converting the direct current into alternating current in which a plurality of self arc-extinguishing elements in series in one phase portion, wherein at least one phase portion of said converter and at least one phase portion of said inverter are mounted on the same cooling device.

2. The device of claim 1, which is mounted on an electric car and controls an induction motor driving the electric car.

3. The device of claim 1 or 2, wherein said converter is a single-phase or three-phase two-level converter in which two self arc-extinguishing elements are connected in series in one phase.

4. The device of claim 1 or 2, wherein said converter is a single-phase or three-phase three-level converter in which four self arc-extinguishing elements are connected in series in one phase.

5. An electric power conversion device having a plurality of circuits with a plurality of self arc-extinguishing elements connected in series, both ends of the circuits being connected to a capacitor in the direct current circuit, wherein a circuit which has its alternating current junction connected to an alternating current source and a circuit which has its alternating current junction connected to a motor are mounted on the same cooling device.

6. The device of claim 5, wherein one circuit which has its alternating current junction connected to said alternating current source and one circuit which has its alternating current junction point connected to said motor are mounted on one surface side of said cooling device, and another circuit having its alternating current junction connected to the alternating current source and another circuit having its alternating current junction point connected to the motor are mounted on another surface side of said cooling device.

7. The device of claim 5 or 6, wherein the circuit for at least one phase includes a plurality of parallel-connected sub-circuits each having at least two self arc-extinguishing elements connected in series.

8. The device of claim 7, wherein said sub-circuit includes first to fourth self arc-extinguishing elements connected in series, the junction between the second and third elements forming said alternating current junction, the junction between the first and second elements being connected to the junction between the third and fourth elements through first and second diodes, and the junction between the first and second diodes being connected to the neutral point of said direct current circuit.
